# EUROPÄISCHE PATENTSCHRIFT

(11) **EP 1 763 459 B1**
(45) Veröffentlichungstag und Bekanntmachung des Hinweises auf die Patenterteilung: **24.09.2008**
(21) Anmeldenummer: 05770670.7
(22) Anmeldetag: 01.07.2005
(51) Int. Cl.: B60R 21/34

(54) **KRAFTFAHRZEUG MIT ANHEBBARER HAUBE**
MOTOR VEHICLE COMPRISING A POP-UP HOOD
VEHICULE A MOTEUR AVEC CAPOT A SOULEVEMENT AUTOMATIQUE

(30) Priorität: 03.07.2004 DE 102004032315
(43) Veröffentlichungstag der Anmeldung: 21.03.2007
(73) Patentinhaber: GM Global Technology Operations, Inc., Detroit, MI 48265-3000 (US)
(72) Erfinder: SCHÄFER, Joachim, 64297 Darmstadt (DE)
(74) Vertreter: Strauss, Peter
(86) Internationale Anmeldenummer: PCT/EP2005/007264
(87) Internationale Veröffentlichungsnummer: WO 2006/002989

(56) Entgegenhaltungen:
- EP-A- 1 361 121
- EP-A- 1 393 999
- DE-A1- 10 152 621
- DE-A1- 10 159 866
- DE-A1- 10 204 594
- GB-A- 2 382 549
- US-B1- 6 439 330

## Beschreibung

Die vorliegende Erfindung betrifft ein Kraftfahrzeug mit einer Karosserie und einer Haube, von der eine erste Kante durch einen an der Karosserie abgestützten Aktuator von einer Ruhestellung in eine Anschlagstellung anhebbar ist und eine zweite Kante an der Karosserie abgestützt ist.

Erhöhte gesetzliche Anforderungen hinsichtlich des Schutzes von Fußgängern bei Unfällen verlangen von modernen Kraftfahrzeugen verbesserte Unfallschutzeigenschaften. Um die Folgen eines Aufpralls insbesondere des Kopfes des Fußgängers auf der Haube für den Fußgänger zu vermindern und den Fußgänger vor schweren Verletzungen zu schützen, ist ein möglichst allmähliches Abbremsen des Fußgängers bzw. von dessen Kopf, etwa durch eine Deformation der Haube, wünschenswert. Für eine solche Deformation muss aber genügend Deformationsraum unterhalb der Haube vorhanden sein. Bei modernen Kraftfahrzeugen handelt es sich bei der vorderen Haube zumeist um eine Motorhaube, wobei der Abstand zwischen ihr und dem Motor nur wenige Zentimeter beträgt. Als Deformationsweg für die Haube ist dieser Abstand zum wirksamen Schutz des Fußgängers jedoch unzureichend. Aus diesem Grund sind Vorrichtungen zum automatischen Anheben der Haube bei einem Aufprall entwickelt worden, die den Abstand zwischen der Haube und dem unter ihr befindlichen Motor und damit den der Haube zur Verfügung stehenden Deformationsweg vergrößern.

Der Ort, an der der Kopf einer angefahrenen Person auf der Motorhaube aufschlägt, hängt von ihrer Körpergröße ab. Um Kinder und Erwachsene gleichermaßen zu schützen, muss daher die Haube auf ihrer gesamten Fläche angehoben werden.

Zum Anheben der Haube sind die verschiedensten Aktuatoren bekannt. Ebenso ist es bekannt, mittels Aktuatoren sowohl eine hintere als auch eine vordere Kante der Haube anzuheben. Ein Kraftfahrzeug, bei dem die vordere Kante der Haube gänzlich ohne vorderen Aktuator anhebbar ist, beschreibt die DE 101 52 621 A1. Ein an der hinteren Kante der Haube angreifender Aktuator bewegt diese bei einem Aufprall schräg nach oben und nach hinten. Durch die Bewegung nach hinten wird auch die vordere Kante in einer schräg nach hinten und nach oben verlaufenden Kulisse der Karosserie verschoben und dadurch angehoben. Nachteilig ist an dieser Ausführung jedoch, dass aufgrund der Schrägführung der Weg, den die Haube zurücklegen muss, um einen vorgegebenen Abstand vom Motor zu erreichen, deutlich länger ist als bei einer vertikalen Anhebung, so dass ein vergleichsweise schneller Aktuator mit großem Hub benötigt wird.

Die Haube soll möglichst schnell nach Erfassung eines Aufpralls ihre angehobene Stellung erreichen; nach Möglichkeit sollte sie sich bereits in der Angehobenen Stellung befinden, wenn der Fußgänger auf sie aufschlägt. Dazu muss die Haube stark beschleunigt werden, und dementsprechend kräftige Aktuatoren werden gebraucht. Werden diese jedoch erst ausgelöst, wenn der Fußgänger die Haube bereits berührt, so bekommt er durch deren Anhebung einen zusätzlichen Schlag versetzt. Die Schutzwirkung der Aufstellung kann sich so ins Gegenteil verkehren.

Aufgabe der vorliegenden Erfindung ist es daher, ein Kraftfahrzeug mit einer anhebbaren Haube vorzuschlagen, bei dem die Gefahr einer Verletzung für einen angefahrenen Fußgänger durch das Anheben der Haube selbst verringert ist.

Diese Aufgabe wird durch das Kraftfahrzeug mit den Merkmalen des Anspruchs 1 gelöst.

Ganz allgemein kann es sich bei der ersten Kante entweder um eine frontseitige, vordere Kante der Haube handeln und bei der zweiten Kante um eine hintere Kante der Haube, oder aber die erste Kante stellt eine hintere Kante der Haube dar und die zweite Kante eine vordere Kante. Weil bei Verkehrsunfällen mit Fußgängern diese in der Regel frontal angefahren werden, ist jedoch bevorzugterweise die erste Kante die hintere Kante der Haube und die zweite Kante ist die vordere Kante der Haube.

Die Erfindung macht sich die Erkenntnis zunutze, dass die vom Aktuator während des schnellen Anhebens der ersten Kante in die Haube eingebrachte Energie, welche unmittelbar nach Anheben der ersten Kante in Form von potentieller und kinetischer Energie in der Haube vorliegt, bzw. der von der Haube aufgenommene Impuls, ausreichend ist, um auch die zweite Kante anzuheben, und zwar im einfachsten Fall ohne den Einsatz weiterer Aktuatoren. Während der schnellen, explosionsartigen Anhebung der ersten Kante wird die Haube elastisch biegebeansprucht, weil aufgrund der Massenträgheit von der ersten Kante beabstandete Bereiche der Haube dieser schnellen Anhebung nicht augenblicklich folgen können und sich die zweite Kante an der Karosserie abstützt. Bei der Verbiegung der Haube wird daher ein Teil der vom Aktuator geleisteten Arbeit als potentielle Energie in Form einer elastischen Verformung gespeichert. Wenn die erste Kante an den Anschlag gelangt, pflanzt sich die Verformung als Biegeschwingung zur zweiten Kante hin fort und reißt die zweite Kante empor, sobald sie dort eintrifft.

Eine elastische Verformung ist allerdings nicht Voraussetzung für ein Anheben der zweiten Kante ohne Aktuator. Wenn man unterstellt, dass die Haube ideal starr ist und sich beim Anheben der ersten Kante nicht verformt, so gewinnt ihr Schwerpunkt während des Anhebens der ersten Kante einen Impuls, der, wenn die erste Kante an ihren Anschlag stößt, nicht vernichtet wird, sondern eine aufwärts gerichtete Kraft an der zweiten Kante bewirkt.

Im einfachsten Fall, d. h. wenn die Beschleunigung durch den ersten Aktuator stark genug ist, kann die Energie der Biegeschwingung und/oder der Impuls des Schwerpunktes ausreichend sein, um auch die zweite Kante bis zu einem Anschlag anzuheben.

Da zum Anheben der zweiten Kante keine zusätzliche Antriebsenergie in die Haube eingespeist wird, kann ein Fußgänger, der die Haube bereits berührt, wenn die Anhebung der zweiten Kante normalerweise beginnnen würde, diese Anhebung durch sein Gewicht blockieren, so dass es allein bei der Anhebung der ersten Kante bleibt. Zusätzliche Verletzungen durch das Hochschnellen der zweiten Kante sind so ausgeschlossen.

Weil außer dem Aktuator zum Anheben der ersten Kante kein weiterer Aktuator für die Anhebung der zweiten Kante notwendig ist, können mit der Erfindung die zweite Kante anhebende Aktuatoren komplett eingespart werden. Auch eine Kulissenführung ist nicht erforderlich. Dadurch ergibt sich als weiterer vorteilhafter Effekt der Erfindung ein Kostenvorteil des erfindungsgemäßen Kraftfahrzeugs und eine Gewichtsverringerung gegenüber bekannten Kraftfahrzeugen mit beidseitig anhebbaren Hauben.

Wenn der Stützpunkt der zweiten Kante an der Karosserie ortsfest ist, verläuft vorzugsweise der Hebeweg der ersten Kante im Wesentlichen kreisbogenförmig um den Stützpunkt. Da im Allgemeinen der Hebeweg im Vergleich zum Abstand der Kanten kurz ist, kann der Kreisbogen auch durch einen geradlinigen Hebeweg angenähert sein, insbesondere wenn der Stützpunkt parallel zur Haubenoberfläche bzw. in Richtung einer Verbindungslinie zwischen den Kanten Spiel hat. Wesentlich ist, dass aus der Bewegung der ersten Kante auf dem Hebeweg nicht unmittelbar Zugkräfte resultieren, die wie bei der Konstruktion aus DE 101 52 621 A1 eine Anhebung der zweiten Kante erzwingen, noch bevor die erste Kante das Ende des Hebweges erreicht hat. Je größer das Spiel des Stützpunktes parallel zur Haubenoberfläche ist, um so größere Abweichungen des Hebeweges von der idealen Kreisbahn können zugelassen werden, ohne dass die zweite Kante vorzeitig zur Anhebung gezwungen ist.

Eine Verbindung zwischen der zweiten Kante und der Karosserie des Kraftfahrzeuges ist vorteilhafterweise durch eine bei Aufprall aktivierbare Trennvorrichtung trennbar, so dass zum Anheben der zweiten Kante kein nennenswerter mechanischer Widerstand zu überwinden ist. Diese Trennvorrichtung kann insbesondere pyrotechnisch oder elektromagnetisch betätigt sein. Die Trennvorrichtung muss keine Antriebskraft zum Anheben der zweiten Kante liefern. Die Trennvorrichtung kann auch eine Sollbruchstelle umfassen. Die Betätigung der Trennvorrichtung erfolgt dann einfach durch Zerstören der Sollbruchstelle durch Nutzung der beim Anheben der ersten Kante in die Haube eingebrachte Energie.

Die Verbindung zwischen Haube und Karosserie kann beispielsweise über ein Haubenschloss verlaufen, mittels welchem die zweite Kante und die Karosserie miteinander verriegelt werden können. Dies wäre zum Beispiel für eine Motorhaube der Fall, welche bei der ersten Kante mittels eines Scharniers klappbar an der Karosserie befestigt ist, so dass die zweite Kante bei entriegeltem Haubenschloss auch ohne Eintritt eines Aufpralls angehoben werden kann.

Bevorzugt umfasst das Haubenschloss zwei aneinander verriegelbare Teile, von denen eines mit der Haube oder der Karosserie fest zusammenhängt und das andere über die trennbare Verbindung an der Karosserie bzw. der Haube gehalten ist. Damit die zweite Kante bei Aufprall lose an der Karosserie gehaltert und anhebbar ist, wird die Verbindung zwischen der Karosserie bzw. der Haube und dem an ihr gehaltenen Teil des Schlosses bei einem Aufprall durch die Trennvorrichtung getrennt.

Sofern eines der Teile des Haubenschlosses über die trennbare Verbindung mit der Karosserie verbunden ist, werden nach Trennen dieser Verbindung die nach wie vor aneinander verriegelten Teile des Haubenschlosses bei Anheben der zweiten Kante zusammen mit dieser angehoben, während im Falle, dass eines der Teile über die trennbare Verbindung mit der Haube verbunden ist, die nach wie vor aneinander verriegelten Teile bei Anheben der zweiten Kante bei der Karosserie verbleiben und die zweite Kante ohne diese beiden Teile angehoben wird.

Die zweite Kante kann aber auch nur bei Aufprall anhebbar sein. Dies ist zum Beispiel dann der Fall, wenn die Verbindung zwischen Haube und Karosserie durch wenigstens ein Scharnier gegeben ist, mit welchem die zweite Kante schwenkbar an der Karosserie gehalten ist. Ein solches Scharnier kann über die trennbare Verbindung an der Karosserie oder an der Haube gehalten sein. Ist das Scharnier über die trennbare Verbindung an der Karosserie gehalten und wird die Verbindung bei einem Fußgängeraufprall getrennt, so wird das Scharnier zusammen mit der sich anhebenden zweiten Kante angehoben. Ist das Scharnier dagegen über die Verbindung an der Haube gehalten, so verbleibt es nach Lösen der Verbindung bei Aufprall bei der Karosserie, und die zweite Kante wird ohne das Scharnier angehoben. Ein Scharnier, das zwei mittels einer von der Trennvorrichtung herausziehbaren Welle gelenkig miteinander verbundene Scharnierteile umfasst, erlaubt eine weitere Variante, bei welcher ein erstes der Scharnierteile fest mit der Karosserie und ein zweites der Scharnierteile fest mit der Haube verbunden ist. In einem solchen Fall hebt sich die zweite Kante lediglich mit dem an der Haube befestigten zweiten Scharnierteil, während das erste Scharnierteil bei der Karosserie verbleibt.

Nach Anheben der zweiten Kante bei Fußgängeraufprall ist es wünschenswert, dass die zweite Kante im angehobenen Zustand verbleibt, so dass besonders bevorzugt wenigstens ein Unterstützungsmittel zum Unterstützen der zweiten Kante im angehobenen Zustand vorgesehen ist. Dieses Unterstützungsmittel ist besonders bevorzugt unter einem bei Aufprall auf die Haube aufschlagenden Körper nachgiebig, um die Aufprallwucht des Körpers zu dämpfen. Ein solches Unterstützungsmittel kann beispielsweise elastisch oder plastisch verformbare Elemente umfassen. Beispiele für ein solches Unterstützungsmittel sind eine Gasfeder oder ein Gassack.

Sofern das Kraftfahrzeug ein oben beschriebenes Haubenschloss mit zwei aneinander verriegelbaren Teilen umfasst, kann das Unterstützungsmittel einerseits an dem normalerweise über die trennbare Verbindung an der Karosserie gehaltenen Teil und andererseits an der Karosserie angreifen, oder das Unterstützungsmittel kann einerseits an dem über die trennbare Verbindung an der Haube gehaltenen Teil und andererseits an der Haube angreifen. Liegt dagegen das oben beschriebene Scharnier vor, so kann dann, wenn das Scharnier über die trennbare Verbindung an der Karosserie gehalten ist, das Unterstützungsmittel einerseits an dem Scharnier und andererseits an der Karosserie angreifen, oder es kann dann, wenn das Scharnier über die trennbare Verbindung an der Haube gehalten ist, das Unterstützungsmittel einerseits an dem Scharnier und andererseits an der Haube angreifen.

Mittels wenigstens eines zweiten Aktuators, der an der zweiten Kante angreift, und der eingerichtet ist, auf die zweite Kante eine von der Karosserie fort treibende Kraft zu erzeugen, wenn sich die zweite Kante um wenigstens eine vorgegebene Aktivierungshöhe oberhalb einer Ruheposition befindet, die die zweite Kante bei geschlossener Haube innehat, lässt sich das Anheben der zweiten Kante vorteilhaft begünstigen. Bis zur vorgegebenen Aktivierungshöhe wird die zweite Kante wie oben beschrieben aufgrund des von der Haube aufgenommenen Impulses angehoben. Gelangt die zweite Kante über die Aktivierungshöhe, so setzt die erste Kraft des zweiten Aktuators ein und begünstigt deren weitere Anhebung. Wenn die Anhebung aber von Anfang an durch einen bereits auf der Haube aufliegenden Fußgänger behindert ist, bleibt der zweite Aktuator unwirksam.

Dabei kann der zweite Aktuator eingerichtet sein, auf die zweite Kante eine zu der Karosserie hin gerichtete Kraft zu erzeugen, wenn sich die zweite Kante unterhalb der vorgegebenen Aktivierungshöhe befindet, wobei diese Kraft klein im Vergleich zu der bei Aktivierung von der Karosserie forttreibenden Kraft sein sollte. Die zu Karosserie hin gerichtete Kraft ist nützlich, um das Trennen der trennbaren Verbindung zu erleichtern.

Besagte Kräfte sind einfach mit Hilfe von zwei zweiten Aktuatoren zu erzeugen, die schwenkbar angeordnet sind und in der Aktivierungshöhe exakt antiparallele Kräfte quer zur Bewegungsrichtung der zweiten Kante auf diese und die Karosserie ausüben.

Ganz besonders bevorzugt ist dabei das Unterstützungsmittel mit dem zweiten Aktuator identisch.

Die Erfindung wird nachfolgend anhand von Zeichnungen näher beschrieben.

Dabei zeigen:
- Fig. 1a)-c): verschiedene Phasen beim Anheben einer Haube;
- Fig. 2: eine schematische Darstellung eines ersten Haubenschlosses;
- Fig. 3a)-c): schematische Darstellungen eines zweiten Haubenschlosses mit Mitteln zum Unterstützen der vorderen Kante der Haube im angehobenen Zustand;
- Fig. 4a)-b): eine Darstellung von an Anlenkpunkten der Unterstüzungsmittel wirkenden Kräften;
- Fig. 5: die Abhängigkeit der auf die zweite Kante wirkenden resultierenden Kraft von der Höhe der Kante; und
- Fig. 6: eine schematische Darstellung eines Scharniers.

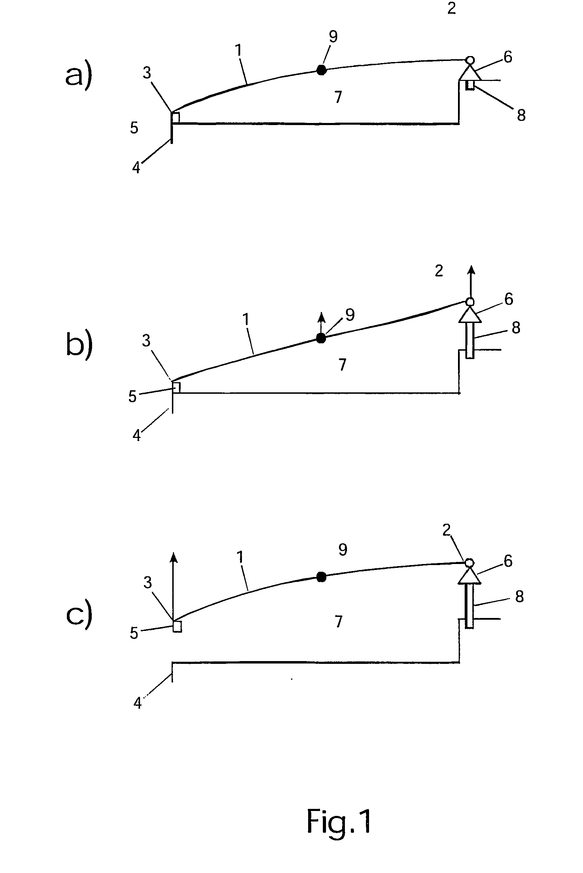

Um das Wirkungsprinzip der Erfindung zu verdeutlichen, ist in Fig. 1a) ein vereinfachter Querschnitt durch einen Frontbereich eines erfindungsgemäßen Kraftfahrzeuges gezeigt. Eine frontseitige Haube 1 weist eine hintere Kante 2 und eine vordere Kante 3 auf. Die vordere Kante 3 der Haube 1 ist mittels eines Schlosses 5 an einer Karosserie 4 des Kraftfahrzeuges befestigt. Die hintere Kante 2 ist durch ein Scharnier 6 an der Karosserie 4 angelenkt. Nach Entriegeln des Schlosses 5 ist die Haube 1 in üblicher Weise im Scharnier 6 verschwenkbar und kann aufgeklappt werden. Im normalen Fahrbetrieb des Kraftfahrzeuges ist die Haube 1 wie in Fig. 1a) gezeigt zugeklappt und deckt einen Motorraum 7 des Kraftfahrzeuges ab, wobei das Schloss 5 verriegelt ist. Im Motorraum 7 ist ein in der Figur nicht sichtbarer Motorblock angeordnet. Beim Scharnier 6 ist ein Aktuator 8 zum Anheben des Scharniers 6 bzw. der hinteren Kante 2 vorgesehen. Schließlich ist der Schwerpunkt 9 der Haube 1 angedeutet.

Kommt es zu einem Aufprall des Fußgängers auf die Haube, dann hebt der Aktuator 8 die hintere Kante 2 der Haube 1 zusammen mit dem Scharnier 6 bis zu einem Anschlag an. Gleichzeitig wird das Schloss 5 entriegelt, so dass die vordere Kante 3 nur noch lose gehaltert ist. Dies wird weiter unten näher erläutert. Fig. 1b) zeigt die Situation während des Anhebens des Scharniers 6. Ein Pfeil kennzeichnet die Aufwärtsbewegung des Scharniers 6 bzw. der hinteren Kante 2. Dabei übt der Aktuator 8 über das Scharnier 6 eine Kraft auf die hintere Kante 2 aus und beschleunigt diese. Der Schwerpunkt 9 kann aufgrund der Massenträgheit der schnellen Aufwärtsbewegung der hinteren Kante 2 nicht sofort folgen, so dass die Haube 1 elastisch verbogen wird. Erst wenn sich die Biegeschwingung zum Schwerpunkt 9 fortgepflanzt hat, beginnt dieser, nach oben zu beschleunigen, was durch einen kleineren Pfeil angedeutet ist.

Erreicht der Aktuator 8 den Anschlag, wird die Aufwärtsbewegung der hinteren Kante 2 der Haube 1 gestoppt. Der Schwerpunkt 9 fährt dagegen wegen der Massenträgheit mit seiner Bewegung nach oben fort. Die in der Haube aufgebaute Biegespannung baut sich dabei ab, und beschleunigt den vorderen Bereich der Haube nach oben. Weil die vordere Kante 3 nur lose an der Karosserie 4 anliegt, wird auch sie angehoben. Die Elastizität der Haube und damit die Ausbreitungsgeschwindigkeit der Biegeschwingung in ihr sind durch die Konstruktion der Haube 1 so festgelegt, dass bei Erfassung eines Fußgängeraufpralls die Zeit, in der die vordere Kante 3 einen oberen Anschlag erreicht, ausreicht, um die Haube 1 vollständig anzuheben, bevor ein Fußgänger auf die Haube 1 auftrifft.

Die Situation nach Anheben der vorderen Kante 3 zeigt die Fig. 1c). Der Aktuator 8 ist bis zum Anschlag ausgefahren, die Haube 1 hat sich entspannt, der Schwerpunkt 9 ist in Ruhe und die vordere Kante 3 ist angehoben. Dank der angehobenen vorderen Kante 3 ist auch im vorderen Bereich der Haube 1 genügend Deformationsraum zwischen der Haube 1 und dem im Motorraum 7 angeordneten Motorblock vorhanden, so dass die Verletzungsgefahr für den Fußgänger, insbesondere für ein bei Aufprall auf den vorderen Bereich der Haube 1 auftreffendes Kind, erheblich verringert ist. Selbst wenn die vordere Kante 3 im angehobenen Zustand nicht unterstützt ist und nach Anheben sofort wieder nach unten schwingt, ergibt sich wegen der sehr kurzen Zeitspanne zwischen Anheben der vorderen Kante 3 und dem Aufprall des Fußgängers auf die Haube 1 eine merklich verringerte Verletzungsgefahr für den Fußgänger.

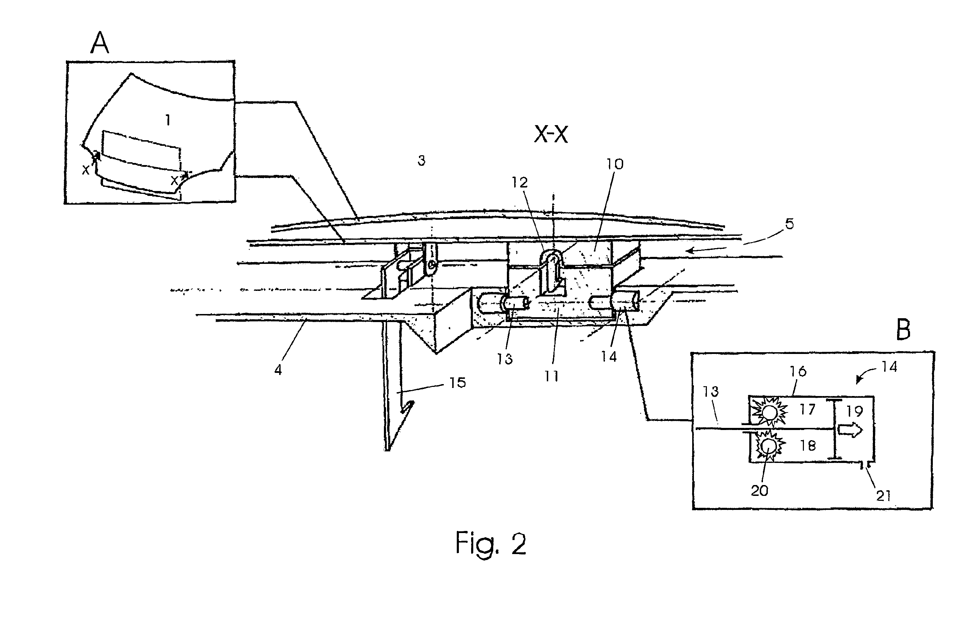

Eine mögliche Ausführungsform für das Schloss 5 des erfindungsgemäßen Kraftfahrzeuges, welche eine lose Halterung der vorderen Kante 3 bei Aufprall erlaubt, so dass die vordere Kante 3 der Haube 1 erfindungsgemäß ohne Aktuator anhebbar ist, zeigt die Fig. 2. Im linken oberen Bild A der Fig. 2 ist ein Schnitt durch die Haube 1 angedeutet, welcher in Fig. 2 vergrößert mit Blick in Richtung der Pfeile X-X dargestellt ist. Zu sehen ist ein Teil der Haube 1 sowie der Karosserie 4. Das Schloss 5 umfasst ein oberes Teil 10 und ein unteres Teil 11, die durch einen am oberen Teil 10 angelenkten Haken 12 aneinander verriegelbar sind. Im dargestellten, verriegelten Zustand des Schlosses 5 ist der Haken 12 an dem unteren Teil 11 verhakt. Das obere Teil 10 ist fest mit der vorderen Kante 3 der Haube 1 verbunden. Das untere Teil 11 ist von einer Ausnehmung der Karosserie 4 aufgenommen und mittels Verbindungsstiften 13 an der Karosserie 4 gehalten, wobei an jedem der Verbindungsstifte 13 eine in die Karosserie 4 eingelassene pyrotechnische Einrichtung 14 angreift. Ein an der Haube 1 angelenkter Fanghaken 15 durchstößt einen Ausschnitt der Karosserie 4, so dass er bei Anheben der vorderen Kante 3 am Rand des Ausschnitts verhakt.

Im rechten unteren Bildausschnitt B ist eine der pyrotechnischen Einrichtungen 14 im schematischen Schnitt dargestellt. Die pyrotechnische Einrichtung 14 umfasst im Wesentlichen einen hohlen Zylinder 16 mit einem darin beweglichen Kolben 17, der den Innenraum des Zylinders 16 in einen Explosionsraum 18 und einen Auspuffraum 19 unterteilt. Einer der Verbindungsstifte 13 durchstößt den Zylinder 16 auf der Seite des Explosionsraumes 18 und ragt in diesen hinein. Sein in den Explosionsraum 18 ragendes Ende ist mit dem Kolben 17 verbunden. Im Explosionsraum 18 sind Treibladungen 20 angeordnet. Schließlich weist der Zylinder 16 auf der Seite des Auspuffraumes 19 eine Düse 21 auf.

Im normalen Betriebszustand des Kraftfahrzeuges ist das Schloss 5 wie in Fig. 2 gezeigt, verschlossen. Der Haken 12 ist mit dem unteren Teil 11 verhakt, die Verbindungsstifte 13 sind in das untere Teil 11 eingesteckt, wodurch dieses an der Karosserie 4 gehaltert ist. Kommt es zu einem Aufprall, bei dem der Aktuator 8 die hintere Kante 2 der Haube 1 anhebt, werden zur gleichen Zeit die Treibladungen 20 in den pyrotechnischen Einrichtungen 14 gezündet, wodurch im Explosionsraum 18 ein Überdruck entsteht, der den Kolben 17 innerhalb des Zylinders 16 in Richtung des Pfeiles verschiebt. Die Düse 21 gewährleistet dabei, dass im Auspuffraum 19 befindliche Luft entweichen kann und sich der Kolben 17 ohne nennenswerten Widerstand bewegt. Durch die Verschiebung des Kolbens 17 wird der mit diesem verbundene Verbindungsstift 13 aus dem unteren Teil 11 herausgezogen. Obwohl das Schloss 5 nach wie vor verschlossen ist, d.h. obwohl der Haken 12 immer noch mit dem unteren Teil 11 verhakt ist, liegt das gesamte Schloss 5 und damit die vordere Kante 3 der Haube 1 nur mehr lose an der Karosserie 4 auf und ist mit ihr allenfalls durch Reibschluss zwischen Seitenflächen des unteren Teils 11 und einer es aufnehmenden Ausnehmung der Karosserie 4 verbunden. Der vergleichsweise schwache Reibschluss wird jedoch überwunden, sobald sich die durch Aufstellen der hinteren Kante 2 in der Haube 1 aufgebaute Biegespannung abbaut. Die dann bei der vorderen Kante 3 auftretenden Kräfte lösen das Schloss 5 endgültig von der Karosserie 4 und heben die vordere Kante 3 an. Dabei wird die Anhebung der vorderen Kante 3 durch den Fanghaken 15 begrenzt, der einen übermäßigen Hub der vorderen Kante 3 verhindert. Wird die vordere Kante 3 nämlich zu hoch angehoben, besteht die Gefahr, dass der Fußgänger direkt auf die vordere Kante 3 statt auf die Oberfläche der Haube 1 prallt und sich dabei verletzt.

In Fig. 2 ist das untere Teil 11 des Schlosses 5 mit den Verbindungsstiften 13 an der Karosserie 4 befestigt. Alternativ dazu ist es auch möglich, das obere Teil 10 auf die gleiche Weise mittels Verbindungsstiften 13 und pyrotechnischen Einrichtungen 14 an der Haube 1 zu befestigen. In einem solchen Fall wird zum Aufstellen der vorderen Kante 3 die Verbindung des oberen Teiles 10 mit der Haube 1 getrennt, so dass sich die vordere Kante 3 ohne Schloss 5, welches jetzt an der Karosserie 4 befestigt verbleibt, anhebt. Alternativ dazu ist es auch möglich, das obere Teil 10 und das untere Teil 11 jeweils fest mit der Haube 1 bzw. der Karosserie 4 zu verbinden und statt dessen für eine Entriegelung des Schlosses 5 bei Aufprall zu sorgen. Dazu kann das Schloss 5 beispielsweise einen entsprechenden pyrotechnischen Aktuator aufweisen, welcher die Verhakung des Hakens 12 an dem unteren Teil 11 löst. In einem solchen Fall wird das an der Haube 1 befestigte obere Teil 10 mit der vorderen Kante 3 angehoben, während das untere Teil 11 an der Karosserie 4 verbleibt.

Selbstverständlich kann die pyrotechnische Einrichtung 14 durch eine beliebige andere Einrichtung ersetzt werden, die bei Aufprall für ein Trennen des unteren Teils 11 von der Karosserie 4 sorgt. Beispielsweise kann es sich bei einer solchen Einrichtung um eine bekannte, elektromagnetisch aktivierbare Einrichtung handeln, die wie die zuvor beschriebene pyrotechnische Einrichtung 14 die Verbindungsstifte 13 aus dem unteren Teil 11 zurückzieht, jedoch elektromagnetisch statt pyrotechnisch angetrieben ist. Bei einer weiteren alternativen Ausführung weisen die Verbindungsstifte 13 jeweilige Sollbruchstellen auf, ohne dass zusätzliche Einrichtungen zum Zurückziehen der Verbindungsstifte 13 vorgesehen sind. Bei Aufprall werden die Verbindungsstifte 13 durch die hohen Kräfte zerstört, die an der vorderen Kante 3 aufgrund einer aufprallbedingten Verformung der Karosserie oder spätestens durch die Erschütterung beim Auftreffen der hinteren Kante an ihren oberen Anschlag zerstört, und der untere Teil 11 des Schlosses 5 wird dadurch von der Karosserie 4 getrennt.

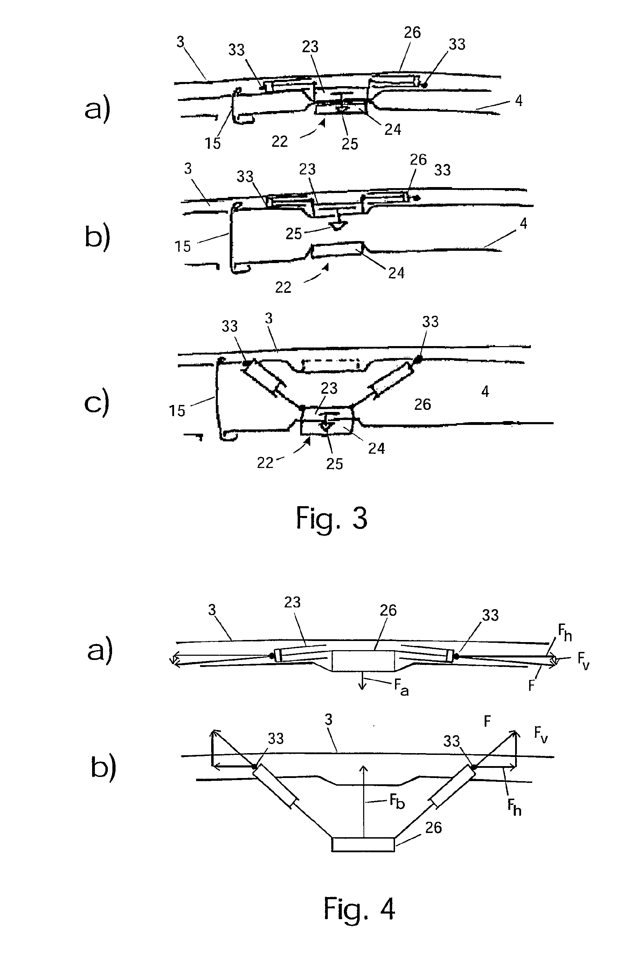

Ein Kraftfahrzeug mit einem dem oben beschriebenen Schloss 5 entsprechenden Schloss 22 mit oberem Teil 23, unterem Teil 24 und Haken 25, bei dem jedoch im Falle eines Aufpralls dessen oberes Teil 23 von der Haube 1 gelöst wird, ist in den Figs. 3a) bis 3c) schematisch aus einer der Fig. 2 entsprechenden Perspektive zu sehen. Neben dem Schloss 22 und dem Fanghaken 15 umfasst das in den Figs. 3a) bis 3c) dargestellte Kraftfahrzeug darüber hinaus zwei Gasfedern 26, die an jeweiligen Anlenkpunkten 33 einmal am oberen Teil 23 und einmal an der Haube 1 angelenkt sind. Weiter unten mit Bezug auf Figs. 4a) und 4b) wird auf die in den Anlenkpunkten 33 wirkenden Kräfte eingegangen.

Fig. 3a) zeigt den Zustand bei normalem Betrieb des Kraftfahrzeuges. Das Schloss 22 ist verriegelt, das obere Teil 23 mit dem unteren Teil 24 verbunden, indem der Haken 25 an diesem verhakt ist. Die inaktiven Gasfedern 26 sind zurückgezogen und in Ausnehmungen der Haube 1 platzsparend aufgenommen.

Fig. 3b) zeigt die Haube 1 im geöffneten Zustand, ebenfalls bei normalem Betrieb des Kraftfahrzeuges. Das obere Teil 23 und das untere Teil 24 sind entriegelt und voneinander gelöst, wobei das obere Teil 23 nach wie vor mit der Haube 1 und das untere Teil 24 mit der Karosserie 4 verbunden ist. Die Gasfedern 28 bleiben inaktiv in den Ausnehmungen der Haube 1 aufgenommen.

Dagegen zeigt die Fig. 3c) die Situation bei Eintreten eines Fußgängeraufpralls, bei dem die vordere Kante 3 angehoben ist. Die Verbindung des oberen Teiles 23 mit der Haube 1 wurde gelöst, so dass sich die vordere Kante 3 ohne das obere Teil 23 angehoben hat. Dabei wird der Hub der vorderen Kante 3 vom Fanghaken 15 begrenzt. Weil die Gasfedern 26 am einerseits am oberen Teil 26 und andererseits an der Haube 1 angelenkt sind und sich die vordere Kante 3 nach oben bewegt, während das von der Haube 1 gelöste obere Teil 23 mit dem unteren Teil 24 verriegelt verbleibt und deshalb keine Aufwärtsbewegung ausführt, werden die Gasfedern 26 aus ihren Ausnehmungen ausgeklappt. Nach Anheben der vorderen Kante 3 sorgen die Gasfedern 26 einmal für eine Unterstützung der vorderen Kante 3, so dass diese nach Anheben in der angehobenen Position verbleibt, und zum anderen bewirken sie eine zusätzliche Dämpfung der Aufprallwucht eines auf die Haube 1 aufprallenden Fußgängers.

Fig. 4a) verdeutlicht die in den Anlenkpunkten 33 wirkenden Kräfte bei geschlossener Haube 1 unmittelbar nach Lösen der Verbindung zwischen dem Teil 23 und der Haube 1 bei einem Aufprall. Unmittelbar nach Lösen der Verbindung hat die Haube 1 die in Fig. 3a) dargestellte Ruheposition inne. Die Gasfedern 26 sind gestaucht und wirken jeweils mit einer Kraft F auf ihren jeweiligen Anlenkpunkt 33, da sie jeweils einen kleinen Winkel mit der Horizontalen bilden. Die Kräfte F sind in Fig. 4a) in ihre horizontalen Komponenten Fₕ und ihre vertikalen Komponenten Fᵥ zerlegt. Während sich die beiden entgegengesetzt gerichteten Komponenten Fₕ kompensieren, sind die vertikalen Komponenten Fᵥ gleich gerichtet und addieren sich zur resultierenden Kraft Fᵣ=Fᵣ₀, die in Richtung der Karosserie 4 wirkt. Sie hält das obere Teil 23 gegen die Haube gedrückt. Wenn die Haube aufgrund ihrer Biegespannung zum Anheben der vorderen Kante 3 ansetzt, wirkt diese Kraft Fᵣ₀ der Anhebung zunächst entgegen. Die Kraft Fᵣ₀ wird aber leicht von der Biegespannung überwunden.

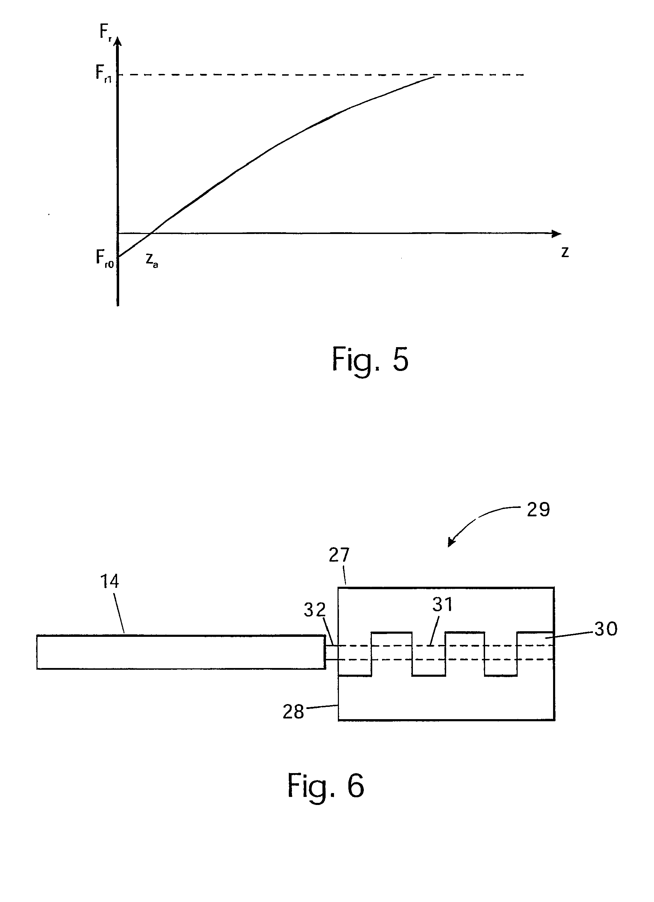

Nach Einsetzen der Hubbewegung der vorderen Kante 3 werden die Gasfedern 26 zunächst noch weiter gestaucht. Dabei nimmt, wie in dem Diagramm der Fig. 5 gezeigt, der Betrag der resultierenden Kraft Fᵣ kontinuierlich ab, bis eine Aktivierungshöhe zₐ erreicht ist, in der die Kräfte F der zwei Gasfedern 26 exakt antiparallel sind. Die weitere Anhebung der vorderen Kante 3 führt zu einer Richtungsumkehr der resultierenden Kraft Fᵣ, die nun wie in Fig. 4b) gezeigt, in der die von der Gasfedern 26 auf die Anlenkpunkte 33 ausgeübten Kräfte F wie in Fig. 4a) in horizontale Komponenten Fₕ und vertikale Komponenten Fᵥ zerlegt sind, von der Karosserie 4 weg nach oben zeigt und die Aufwärtsbewegung der vorderen Kante 3 unterstützt. Im angehobenen Zustand der vorderen Kante 3 wirken die Gasfedern 26 mit der maximalen resultierenden Kraft Fᵣ₁, deren Betrag größer ist als der Betrag der maximalen Kraft Fᵣ₀, auf die vordere Kante 3. Durch diese Ausgestaltung mit symmetrisch angeordneten Gasfedern 26 wird erreicht, dass die Anhebung der vorderen Kante 3 von den Gasfedern 26 zwar unterstützt wird, es kommt aber zu keinem explosionsartigen Hochschießen der vorderen Kante 3. Vor allem aber unterbleibt die Aufwärtsbewegung, wenn der Fußgänger schon vor Beginn des Anhebens auf der Haube 1 aufgeprallt ist, weil dann die Energie der Haube nicht ausreicht, um die Aktivierungshöhe zu erreichen, ab der die Gasfedern 26 die Haube weiter hochtreiben.

Statt der gezeigten Gasfedern 26 können alternativ auch beliebige andere Mittel zum Unterstützen der vorderen Kante 3 in der angehobenen Position eingesetzt werden, die durch elastische oder plastische Verformung für eine Dämpfung der Aufprallwucht für den Fußgänger sorgen und die die angehobene vordere Kante 3 unterstützen. Geeignete Mittel wären beispielsweise unter anderem verbiegbare Elemente wie Metall- oder Kunststoffstäbe, die wie die oben beschriebenen Gasfedern 26 ein- und ausklappbar ausgebildet sein können. Andere Mittel zum Unterstützen der angehobenen vorderen Kante 3, die sich zudem für auf die Haube 1 aufprallende Fußgänger dämpfend auswirken, sind beispielsweise Schaumkörper oder ein Gassack, der im Falle eines Aufpralls bei Anheben der vorderen Kante 3 aufgeblasen wird.

In den beschriebenen Ausführungsbeispielen sind die oberen Teile 10, 23 und die zugehörigen unteren Teile 11, 24 Teile von Schlössern 5, 22. Es ist aber auch denkbar, dass ein Scharnier 29 ein oberes Scharnierteil 27 und ein unteres Scharnierteil 28 umfasst, wie Fig. 6 vereinfachend zeigt, wobei die Haube 1 mit dem Scharnier 29 bei der zweiten Kante 3 klappbar an der Karosserie 4 befestigt ist. In einem solchen Fall ist gewöhnlicherweise bei der ersten Kante 2 ein Schloss oder eine andere geeignete Verriegelungsvorrichtung vorgesehen, die bei Aufprall vom Aktuator 8 zusammen mit der ersten Kante 2 angehoben wird. Die beiden Scharnierteile 27, 28 sind mittels einer einzigen durchgängigen Welle 32, die in jeweils kammartig ineinandergreifende Vorsprünge 30 der Scharnierteile 27, 28 mit durchgängigen Öffnungen 31 eingesteckt ist, schwenkbar miteinander verbunden. Wie die oben beschriebenen Verbindungsstifte 13 ist die Welle 32 an ihren aus den Vorsprüngen 30 ragenden Enden mit jeweils einer pyrotechnischen Einrichtung 14 verbunden.

Bei einem Fußgängeraufprall wird die Treibladung 20 der pyrotechnischen Einrichtung 14 gezündet und die Welle 32 wird wie die Verbindungsstifte 13 im vorherigen Beispiel aus dem unteren Teil 11 aus den Öffnungen 31 herausgezogen. Dadurch werden die beiden Scharnierteile 27, 28 voneinander gelöst.

## Patentansprüche

1. Kraftfahrzeug mit einer Karosserie (4), einer Haube (1), von der eine erste Kante (2) durch einen an der Karosserie (4) abgestützten Aktuator (8) von einer Ruhestellung in eine Anschlagstellung anhebbar ist und eine zweite Kante (3) an der Karosserie (4) abgestützt ist, **dadurch gekennzeichnet, dass** ein Stützpunkt der zweiten Kante (3) an der Karosserie (4) und der Verlauf des Hebeweges der ersten Kante (2) von der Ruhestellung in die Anschlagstellung so aneinander angepasst sind, dass sie eine Anhebung der ersten Kante (2) ohne gleichzeitige Anhebung der zweiten Kante (3) erlauben, dass die zweite Kante (3) wenigstens dann anhebbar ist, wenn die erste Kante (2) sich in der Anschlagstellung befindet, und dass die Antriebskraft des Aktuators (8) ausreichend bemessen ist, um der Haube (1) bis zum Erreichen der Anschlagstellung einen Impuls in Heberichtung zu verleihen, der ausreicht, um die zweite Kante (3) anzuheben.

2. Kraftfahrzeug nach Anspruch 1, **dadurch gekennzeichnet, dass** der Stützpunkt der zweiten Kante (3) und der Hebeweg aneinander angepasst sind, indem der Hebeweg im Wesentlichen kreisbogenförmig um den an der Karosserie (4) ortsfesten Stützpunkt verläuft.

3. Kraftfahrzeug nach Anspruch 1, **dadurch gekennzeichnet, dass** der Stützpunkt der zweiten Kante (3) parallel zur Haubenoberfläche Spiel aufweist.

4. Kraftfahrzeug nach einem der vorhergehenden Ansprüche, **gekennzeichnet durch** eine bei einem Fußgängeraufprall aktivierbare Trennvorrichtung (13, 14, 32) zum Trennen einer Verbindung zwischen der Karosserie (4) und der zweiten Kante (3).

5. Kraftfahrzeug nach Anspruch 4, **dadurch gekennzeichnet, dass** die Trennvorrichtung (13, 14, 32) pyrotechnisch oder elektromagnetisch betätigt ist, oder dass sie wenigstens ein Element (13) mit einer Sollbruchstelle umfasst.

6. Kraftfahrzeug nach einem der vorhergehenden Ansprüche, **gekennzeichnet durch** ein Haubenschloss (5), **durch** welches die zweite Kante (3) an der Karosserie (4) gehalten ist.

7. Kraftfahrzeug nach Anspruch 6 und einem der Ansprüche 4 oder 5, **dadurch gekennzeichnet, dass** das Haubenschloss durch die Trennvorrichtung entriegelbar ist.

8. Kraftfahrzeug nach Anspruch 6 und einem der Ansprüche 4 oder 5, **dadurch gekennzeichnet, dass** das Haubenschloss (5) zwei aneinander verriegelbare Teile (10, 11; 23, 24) umfasst, von denen eines mit der Haube (1) oder der Karosserie (4) fest zusammenhängt und das andere über die trennbare Verbindung an der Karosserie (4) bzw. der Haube (1) gehalten ist.

9. Kraftfahrzeug nach einem der Ansprüche 1 bis 5, **gekennzeichnet durch** wenigstens ein Scharnier (29), mit welchem die zweite Kante (3) schwenkbar an der Karosserie (4) gehalten ist.

10. Kraftfahrzeug nach Anspruch 9 und einem der Ansprüche 4 oder 5, **dadurch gekennzeichnet, dass** das Scharnier (29) über die trennbare Verbindung entweder an der Karosserie (4) oder an der Haube (1) gehalten ist.

11. Kraftfahrzeug nach Anspruch 9 und einem der Ansprüche 4 oder 5, **dadurch gekennzeichnet, dass** das Scharnier (29) zwei mittels einer von der Trennvorrichtung (14, 32) herausziehbaren Welle (32) gelenkig miteinander verbundene Scharnierteile (27, 28) umfasst, wobei ein erstes der Scharnierteile (27, 28) fest mit der Karosserie (4) und ein zweites der Scharnierteile (27, 28) fest mit der Haube (1) verbunden ist.

12. Kraftfahrzeug nach einem der vorhergehenden Ansprüche, **gekennzeichnet durch** wenigstens ein Unterstützungsmittel (26) zum Unterstützen der zweiten Kante (3) in einer angehobenen Stellung.

13. Kraftfahrzeug nach Anspruch 12, **dadurch gekennzeichnet, dass** das Unterstützungsmittel (26) unter einem bei Aufprall auf die Haube (1) aufschlagenden Körper nachgiebig ist.

14. Kraftfahrzeug nach Anspruch 13, **dadurch gekennzeichnet, dass** das Unterstützungsmittel eine Gasfeder (26) oder ein Gassack ist.

15. Kraftfahrzeug nach einem der Ansprüche 12 bis 14 und Anspruch 8, **dadurch gekennzeichnet, dass** das Unterstützungsmittel (26) einerseits an dem über die Verbindung an der Karosserie (4) gehaltenen Teil (11) und andererseits an der Karosserie (4)angreift, oder dass das Unterstützungsmittel (26) einerseits an dem über die Verbindung an der Haube (1) gehaltenen Teil (23) und andererseits an der Haube (1) angreift.

16. Kraftfahrzeug nach einem der Ansprüche 12 bis 14 und Anspruch 10, **dadurch gekennzeichnet, dass** dann, wenn das Scharnier (29) über die Verbindung an der Karosserie (4) gehalten ist, das Unterstützungsmittel (26) einerseits an dem Scharnier (29) und andererseits an der Karosserie (4) angelenkt ist, oder dass dann, wenn das Scharnier (29) über die Verbindung an der Haube (1) gehalten ist, das Unterstützungsmittel (26) einerseits an dem Scharnier (29) und andererseits an der Haube (1) angelenkt ist.

17. Kraftfahrzeug nach einem der vorhergehenden Ansprüche, **dadurch gekennzeichnet, dass** an der zweiten Kante (3) wenigstens ein zweiter Aktuator (26) angreift, der eingerichtet ist, auf die zweite Kante (3) eine die zweite Kante (3) von der Karosserie (4) fort treibende Kraft (Fᵣ) zu erzeugen, wenn sich die zweite Kante (3) um wenigstens eine vorgegebene Aktivierungshöhe (zₐ)oberhalb einer Ruheposition befindet, die die zweite Kante (3) bei geschlossener Haube (1) innehat.

18. Kraftfahrzeug nach Anspruch 17, **dadurch gekennzeichnet, dass** der zweite Aktuator (26) eingerichtet ist, auf die zweite Kante (3) eine zu der Karosserie (4) hin gerichtete Kraft (Fᵣ) zu erzeugen, wenn sich die zweite Kante (3) unterhalb der vorgegebenen Aktivierungshöhe befindet, wobei ein größtmöglicher Betrag (|Fᵣ₁|) der zur Karosserie hin gerichteten Kraft kleiner ist als ein größtmöglicher Betrag (|Fᵣ₂|) der von der Karosserie fort gerichteten Kraft.

19. Kraftfahrzeug nach Anspruch 17 oder 18, **gekennzeichnet durch** zwei spiegelsymmetrisch angeordnete zweite Aktuatoren (26), die in der Ruheposition Kräfte mit jeweils einander entgegengesetzt wirkenden, zur Richtung der Anhebung der zweiten Kante senkrechten Kraftkomponenten bewirken.

20. Kraftfahrzeug nach einem der Ansprüche 12 bis 16 und einem der Ansprüche 17 bis 19, **dadurch gekennzeichnet, dass** das Unterstützungsmittel mit dem zweiten Aktuator identisch ist.

## Claims

1. Motor vehicle with a body (4) and a hood (1) from which a first edge (2) can been raised from a stationary position by a supported actuator on the car body (4) and a second edge (3) is supported by the car body (4); said motor vehicle is **characterised in that** an interpolation point of the second edge (3) is adjusted to the car body (4) and to the course of the first edge's (2) hoisting path (from a stationary position to a raised position) in such a way that they allow the first edge (2) to be raised without raising the second edge (3); also, that the second edge (3) can at least be raised when the first edge (2) is in the raised position and that the operating power of the actuator (8) is measured sufficiently in order to give the hood (1) an impulse in the direction it is to be raised until it has reached the raised position, and which is enough to allow the second edge (3) also to be raised.

2. Motor vehicle according to claim 1, **characterised in that** the interpolation point of the second edge (3) and the hoisting path are adjusted to one another **in that** the hoisting path essentially runs in a circular arc around a fixed point on the car body (4).

3. Motor vehicle according to claim 1, **characterised in that** the interpolation point of the second edge comprises a clearance parallel to the hood surface.

4. Motor vehicle according to one of the previous claims, **characterised by** a separation device (13, 14, 32) for separating a connection between the car body (4) and the second edge (3); this separation device is activated in the event of a collision with a pedestrian.

5. Motor vehicle according to claim 4, **characterised in that** the separation device (13, 14, 32) is operated pyrotechnically or electromagnetically, or that it includes at least one element (13) with a predetermined breaking point.

6. Motor vehicle according to one of the previous claims, **characterised by** a hood lock (5) through which the second edge (3) is held onto the car body (4).

7. Motor vehicle according to claim 6 and one of the claims 4 or 5, **characterised in that** the hood lock can be unlocked by the separation device.

8. Motor vehicle according to claim 6 and one of the claims 4 or 5, **characterised in that** the hood lock (5) includes two parts which can be locked together (10, 11, 23, 24), of which one is connected securely with the hood (1) or the car body (4) and the other is held by the separable connection on the car body (4) or hood (1).

9. Motor vehicle according to one of the claims 1 through 5, **characterised by** at least one hinge (29) with which the second edge (3) is adjustably held to the car body (4).

10. Motor vehicle according to claim 9 and one of the claims 4 or 5, **characterised in that** the hinge (29) is held by the separable connection either on the car body (4) or on the hood (1).

11. Motor vehicle according to claim 9 and one of the claims 4 or 5, **characterised in that** the hinge (29) encompasses two hinge components which are flexibly connected with each other by a shaft on the separation device (14, 32) which can be pulled out, wherein the first hinge component (27, 28) is bound securely to the car body (4) and a second hinge component (27, 28) is securely fastened to the hood (1).

12. Motor vehicle according to one of the previous claims, **characterised by** at least one support device (26) for supporting the second edge (3) in a raised position.

13. Motor vehicle according to claim 12, **characterised in that** the support device (26) is compliant in the event of a pedestrian's body colliding with the hood (1).

14. Motor vehicle according to claim 13, **characterised in that** the support device is a gas spring (26) or a gas bag.

15. Motor vehicle according to one of the claims 12 through 14 and claim 8, **characterised in that** the support device (26) attaches itself on one side to the part (11) held on the car body by the connection (4) and on the other side attaches itself to the car body (4); alternatively, said support device (26) is attached on the one side to the part (23) held by a connection on the hood and is attached to the hood on the other side.

16. Motor vehicle according to one of the claims 12 through 14 and claim 10, **characterised in that** when the hinge (29) is held by the connection to the car body (4), the support device (26) is held on one side by the hinge (29) and on the other side is linked to the car body; alternatively, when the hinge (29) is held by the connection to the hood (1), the support device (26) is linked on one side to the hinge (29) and on the other side to the hood (1).

17. Motor vehicle according to one of the previous claims, **characterised in that** at least one second actuator (26) is configured to supply the force (F) to the second edge (3) which will drive the second edge away from the car body (4) when the second edge (3) is located at at least the prescribed activation height above its stationary position.

18. Motor vehicle according to claim 17, **characterised in that** the second actuator (26) is configured to create force in the direction of the car body (4) for the second edge (3) when the second edge (3) is located underneath the prescribed activation height, wherein a maximum amount () of force directed towards the car body is smaller than a maximum amount () of force directed away from the car body.

19. Motor vehicle according to claim 17 or 18, **characterised by** two symmetrically configured second actuators (26), which, when in a stationary position, cause forces which work against one another and cause vertical force to raise the second edge.

20. Motor vehicle according to one of the claims 12 through 16 and one of the claims 17 through 19, **characterised in that** the support device is identical to the second actuator.

## Revendications

1. Véhicule à moteur avec une carrosserie (4), un capot (1), ayant un premier bord (2) capable d'être soulevé, d'une position de repos à une position d'arrêt, par un actionneur (8) fixé sur la carrosserie (4) et un second bord (3) fixé à la carrosserie (4), **caractérisé en ce que** un point d'appui du second bord (3) sur la carrosserie (4) et le cheminement du soulèvement du premier bord (2), de la position de repos à la position d'arrêt, sont ajustés l'un à l'autre de telle manière qu'ils permettent un soulèvement du premier bord (2) sans un soulèvement simultané du second bord (3), que le second bord (3) est au moins capable d'être soulevé, si le premier bord (2) se trouve en position d'arrêt, et que la force motrice de l'actionneur (8) est suffisante pour pouvoir donner au capot, (1) jusqu'à atteinte de la position d'arrêt, une impulsion dans le sens du soulèvement, qui suffit pour provoquer un soulèvement du second bord (3).

2. Véhicule à moteur selon revendication 1, **caractérisé en ce que** le point d'appui du second bord (3) et le soulèvement sont ajustés l'un à l'autre, étant donné que le soulèvement suit un cheminement dans l'essentiel en arc de cercle autour du point d'appui fixé au niveau de la carrosserie (4).

3. Véhicule à moteur selon revendication 1, **caractérisé en ce que** le point d'appui du second bord (3) présente parallèlement à la surface du capot un cycle de manoeuvre.

4. Véhicule à moteur selon l'une revendications précédentes, **caractérisé en ce qu'**il existe un dispositif sectionneur (13, 14, 32), activable pour séparer une liaison entre la carrosserie (4) et le second bord (3).

5. Véhicule à moteur selon revendication 1, **caractérisé en ce que** le dispositif sectionneur (13, 14, 32) est actionné d'une façon pyrotechnique ou électromagnétique, ou bien qu'il comprend au moins un élément (13) avec un point théorique de rupture.

6. Véhicule à moteur selon l'une revendications précédentes, **caractérisé par** une serrure de capot (5) au moyen de laquelle, le second bord (3) est maintenu sur la carrosserie (4).

7. Véhicule à moteur selon revendication 6 et l'une des revendications 4 ou 5, **caractérisé en ce que** la serrure de capot est capable d'être déverrouillée par le dispositif sectionneur.

8. Véhicule à moteur selon revendication 6 et l'une des revendications 4 ou 5, **caractérisé en ce que** la serrure de capot (5) comprend deux unités verrouillables l'une par rapport à l'autre (10, 11 ; 23, 24), dont l'une est fixée au capot (1) ou à la carrosserie (4) alors que l'autre est maintenue par la connexion séparable, à la carrosserie (4) reps. au capot (1).

9. Véhicule à moteur selon l'une revendications 1 à 5, **caractérisé par** au moins une charnière (29), au moyen de laquelle, le second bord (3) est maintenu pivotant au niveau de la carrosserie (4).

10. Véhicule à moteur selon revendication 9 et l'une des revendications 4 ou 5, **caractérisé en ce que** la charnière (29) est maintenue à laide de la connexion séparable, ou bien à la carrosserie (4) ou bien au capot (1).

11. Véhicule à moteur selon revendication 9 et l'une des revendications 4 ou 5, **caractérisé en ce que** la charnière (29) comprend deux parties de charnière (27, 28) qui sont articulées l'une à l'autre à l'aide d'un axe extractible à partir du dispositif sectionneur (14, 32), étant donné qu'une première partie des deux parties de charnière (27, 28) est fixée à la carrosserie (4) et une deuxième partie des deux parties de charnière (27, 28) est fixée au capot (1).

12. Véhicule à moteur selon l'une des revendications précédentes, **caractérisé par** au moins un moyen de soutien (26) pour le soutien du second bord (3) en position élevée.

13. Véhicule à moteur selon revendication 12, **caractérisé en ce que** le moyen de soutien (26) est souplement déformable sous un corps écrasé sur le capot (1) à la suite d'une collision.

14. Véhicule à moteur selon revendication 13, **caractérisé en ce que** le moyen de soutien (26) est un amortisseur pneumatique (26) ou bien un sac de gaz.

15. Véhicule à moteur selon revendication 8 et l'une des revendications 12 jusqu'à 14, **caractérisé en ce que** le moyen de soutien (26) touche, d'un cote à l'élément (11) maintenu par la liaison à la carrosserie (4), et de l'autre à la carrosserie (4), ou bien que le moyen de soutien (26) ) touche, d'un côté à l'élément (23) maintenu par la liaison au capot (1), et de l'autre au capot (1).

16. Véhicule à moteur selon revendication 10 et l'une des revendications 12 jusqu'à 14, **caractérisé en ce que** en cas où la charnière (29) est maintenu par la liaison à la carrosserie (4), alors le moyen de soutien (26) est articulé d'un côté à la charnière (29) et de l'autre à la carrosserie (4), ou bien alors, dans le cas où la charnière (29) est maintenue par la liaison au capot (1), alors le moyen de soutien (26) est articulé d'un côté à la charnière (29) et de l'autre au capot (1).

17. Véhicule à moteur selon l'une des revendications précédentes, **caractérisé en ce que** au niveau du second bord (3), au moins un deuxième actionneur (26) est mis en jeu, qui est établi pour produire sur le second bord (3), une force motrice (Fr) entrainant le second bord (3) loin de la carrosserie (4), si le second bord (3) se trouve au dessus d'une position de repos, à au moins une certaine hauteur donnée d'activation (Za), détenant ainsi le second bord (3) quand le capot (1) est fermé.

18. Véhicule à moteur selon revendication 17, **caractérisé en ce que** le deuxième actionneur (26) est établi pour produire sur le second bord (3), une force motrice (Fr) dirigée vers la carrosserie (4), en cas où le second bord (3) se trouve au dessous de la hauteur d'activation donnée, étant donné que la plus grande valeur absolue (IFr1I) de la force dirigée vers la carrosserie, est plus petite que la plus grande valeur absolue (IFr2I) de la force dirigée de façon opposé à la carrosserie.

19. Véhicule à moteur selon revendication 17 ou 18, **caractérisé par** deux, deuxièmes actionneurs (26), qui sont disposés en symétrie miroir, et qui provoquent dans la position de repos, des forces avec des composantes de force agissantes contrairement l'une à l'autre, et qui sont perpendiculaires à la direction du soulèvement du second bord (3).

20. Véhicule à moteur selon l'une des revendications 12 à 16 et l'une des revendications 17 à 19, **caractérisé en ce que** le moyen de soutien et le deuxième actionneur sont identiques.
